# EUROPEAN PATENT APPLICATION

(11) **EP 2 960 176 A1**
(43) Date of publication of application: **30.12.2015**
(21) Application number: 14753993.6
(22) Date of filing: 19.02.2014
(51) Int. Cl.: B65D 51/16, F16K 15/14, B65D 81/20

(54) **CHECK VALVE FOR VACUUM CONTAINER AND VACUUM CONTAINER LID USING SAME**

(30) Priority: 22.02.2013 KR 20130019350
(71) Applicant: Boru International Co., Ltd., Yongin-si, Gyeonggi-do 448-821 (KR)
(72) Inventor: PARK, Sou Kyu, Yongin-si Gyeonggi-do 448-981 (KR)
(74) Representative: Gritschneder, Sebastian
(86) International application number: PCT/KR2014/001333
(87) International publication number: WO 2014/129793

(57) **Abstract**

Disclosed is a check valve which has an excellent sealing force compared with a conventional one by applying a relatively small force which lifts the edge of a valve body part even with a vacuum indicating part being sunk, and which can maintain a vacuum state for a longer time by preventing a ring shape from being dented at a low or high vacuum level. The check valve has features including: a valve body part which is made of an elastic material, is provided with a concave part for providing on the bottom surface thereof an empty space higher than the edge thereof, and has a through-hole vertically formed therein; a vacuum indicating part which is connected integrally to the valve body part along the inner wall surface of the through-hole at a position spaced downwardly from the top of the through-hole, is formed to be thinner than the thickness of the valve body part and protrude upwardly, and sinks toward a lid when negative pressure is generated in the space between the lid and the valve body part; and a fixing part which is coupled to a valve coupling part so as to fix the valve body part to the valve coupling part.

## Description

### [Field of Technology]

The invention relates to improvements of a check valve and a lid using it, and more specifically to improvements of a check valve that can be used for vacuum container and a vacuum container lid using the same.

### [Background of Technology]

In general, moist food gets spoiled relatively easily in air of atmosphere. Usually, food is put in a regular food container and stored in a refrigerator. However, it is difficult to store food for a long time by putting food in a regular food container and then in refrigerator.

In order to store food for a longer time period, a multi-purpose vacuum container lid for storing food were developed, in which a check valve is installed in a lid and air is extracted from inside, generating vacuum below the atmospheric pressure inside.

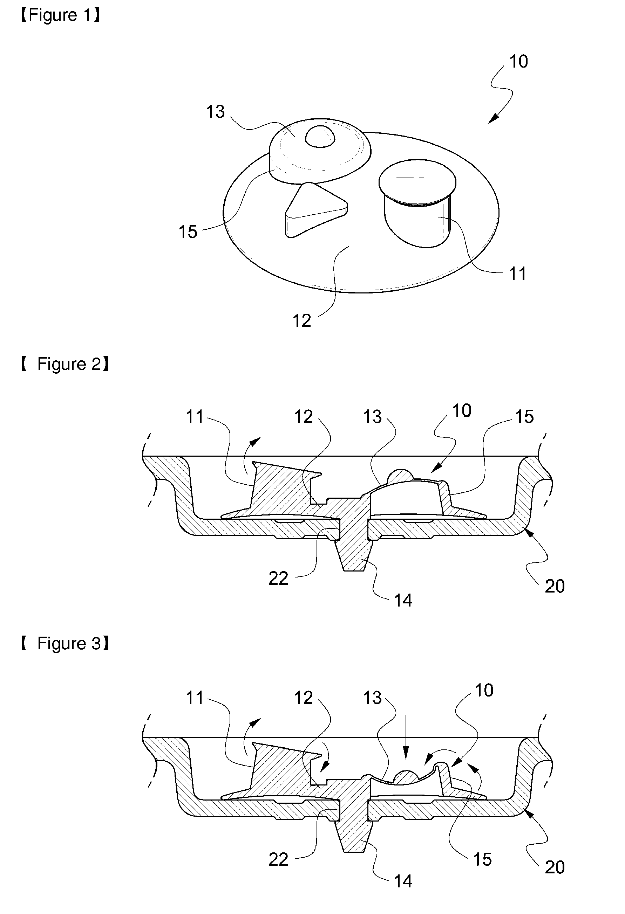

Fig. 1 is a perspective view showing an example disclosed in prior arts, Fig. 2 is a cross-sectional view in a state that the check valve in Fig. 1 is installed in a lid, and Fig. 3 is a diagram showing a state that negative pressure is generated below the check valve in Fig. 2.

Figs. 1 to 3 show a conventional check valve 10. The check valve 10 includes a check valve body 12 installed with a handle 11 on a top surface. At a portion of the check valve body 12 is installed a vacuum indicating part 13. This vacuum indicating part 13 performs a function of showing to a user that vacuum is generated by sinking downwards as shown in Fig. 3 when negative pressure is formed below the check valve 10. At a central bottom portion of the check valve body 12 is formed fixing protrusion 14 protruding downwards for fixing to a valve installing hole 22 formed in the lid 20.

The vacuum indicating part 13 installed in the conventional check valve 10 as shown in Figs. 1 to 3 is formed a cylindrical part 15 protruding upwards, and is formed convexly upwards and thinner than neighboring check valve body 12 at a top end of the cylindrical part 15.

In the conventional vacuum container 10 as shown in Figs. 1 to 3, there is a disadvantage that the vacuum state is resolved fast.

### [Detailed Description of Invention]

### [Problems to Solve]

The inventor, after observing and performing research for figuring out reasons for such disadvantages of the conventional check valve 10 shown in Figs. 1 to 3, recognized that the reason for the fast resolving of vacuum state in the conventional check valve 10 shown in Figs. 1 to 3 is as follows.

In a state of installing the conventional check valve 10 in the lid 20 as shown in Figs. 1 to 3, when vacuum is generated in the lower portion of the check valve 10 and the vacuum indicating part 13 sinks downwards, the vacuum indicating part 13 pulls the top end of the cylindrical part 15 in a sinking direction, and therefore the top end of the cylindrical part 15 is pulled inwards. By this, outer cross-sectional wall of the cylindrical part 15 rotates in a direction of arrow with the lower end as a center and applies force for lifting an edge of the check valve 10 outside the cylindrical part 15 upwards. By this, the conventional check valve 10 cannot avoid resolving of sealing force.

An object of the invention is to provide a check valve for vacuum container having excellent sealing force compared to the prior arts.

Another object of the invention is to provide a check valve, which exerts force lifting an edge of the check valve upwards relatively less even though a vacuum indicating part sinks.

Still another object of the invention is to provide a lid for vacuum container having excellent sealing force.

### [Technological Solutions to Problems]

A check valve according to the invention is for engaging a lid having through-hole and valve coupling part and controlling air flow through the through-hole and comprises: a valve body part which is made of an elastic material, is provided with a concave part for providing on the bottom surface thereof an empty space higher than the edge thereof, and has a through-hole vertically formed therein; a vacuum indicating part which is connected integrally to the valve body part along the inner wall surface of the through-hole at a position spaced downwardly from the top of the through-hole, is formed to be thinner than the thickness of the valve body part and protrude upwardly, and sinks toward a lid when negative pressure is generated in the space between the lid and the valve body part; and a fixing part which is coupled to a valve coupling part so as to fix the valve body part to the valve coupling part.

Preferably, the vacuum indicating part is connected integrally to the valve body part along the inner wall surface of the through-hole at a position spaced upwardly from the bottom of the through-hole.

A length of a cross-sectional surface of the vacuum indicating part is not less than a surface length of a bottom of the vacuum indicating part facing the cross-sectional surface of the vacuum indicating part, and wherein the surface length is a sum of a surface length of the lid facing the cross-sectional surface of the vacuum indicating part, a length from an end of the cross-sectional surface of the vacuum indicating part to a surface of the lid below the end, and a length from the other end of the cross-sectional surface of the vacuum indicating part to the surface of the lid below the other end.

Preferably, an edge protrusion is provided, which is formed continuously along an edge top surface of the valve body part so as to have a ring shape and protrudes upwardly.

A handle is installed, which is provided protruding upwardly at an edge of the valve body part and configured for being grabbed by a hand of user and lifted by an edge of the valve body part so as to relieve vacuum state.

Preferably, the handle has a shape of rectangular cylinder, a protruding bump protruding outwardly on a top end of the handle, and an outer side surface of the handle is formed so as to be sloped inwardly as going upwardly from an edge of the valve body part.

Preferably, in a state of being installed in the lid through the fixing part the edge of the valve body part is pressed upwardly by a surface of the lid.

A vacuum container lid for opening or closing an opening of the container main body provided in an internal space for storing contents, the vacuum container lid comprising: a lid body having a packing provided on a bottom surface so as to seal the opening of the container main body and formed with a through-hole and a valve coupling part; and a check valve coupled to the valve coupling part and for controlling air flow through the through-hole.

The check valve comprises: a valve body part which is made of an elastic material, is provided with a concave part for providing on the bottom surface thereof an empty space higher than the edge thereof, and has a through-hole vertically formed therein; a vacuum indicating part which is connected integrally to the valve body part along the inner wall surface of the through-hole at a position spaced downwardly from the top of the through-hole, is formed to be thinner than the thickness of the valve body part and protrude upwardly, and sinks toward a lid when negative pressure is generated in the space between the lid and the valve body part; and a fixing part which is coupled to a valve coupling part so as to fix the valve body part to the valve coupling part, and the check valve is according to the invention.

In such a case, it is preferable that in the check valve, in a state of being installed in the lid through the fixing part, the edge of the valve body part is pressed upwardly by a surface of the lid even though negative pressure is not formed in the container main body.

That is, in the check valve, the edge of the valve body part is pressed upon the top surface of the lid by a catching bump formed a bottom side part of the fixing part and caught at a bottom surface of the lid through the valve coupling part.

It is preferable that the edge of the valve body part is pressed upon the top surface of the lid, so that when pressing the lid installed in the container main body the air in the internal space of the container main body escapes to outside and generates an air-venting effect sound.

### [Effects of Invention]

Since the vacuum indicating part is installed in the inner wall surface of the through-hole formed in the valve body part and the force lifting the edge of the valve body part acts relatively less even in a state that the vacuum indicating part sinks, the check valve according to the invention is more excellent in sealing force than the prior arts.

Also, a ring-shaped protrusion is formed along a top edge surface of the valve body part so as to prevents the ring shape from being deformed, so that the check valve according to the invention makes vacuum state maintained longer.

### [Brief Description of Drawings]

Fig. 1 is a perspective view showing an example of check valve disclosed in prior arts;
Fig. 2 is a cross-sectional view of a state that the check valve of Fig. 1 is installed in a lid;
Fig. 3 is a diagram showing a state that negative pressure is formed below the check valve of Fig. 2;
Fig. 4 is a perspective view showing a check valve according to the invention;
Fig. 5 is a perspective bottom view of the check valve of Fig. 4;
Fig. 6 is a cross-sectional view along I-I in Fig. 4;
Fig. 7 is a cross-sectional view of a vacuum container in a state that the check valve according to the invention is installed in the lid;
Fig. 8 is a cross-sectional view of a state that a weak negative pressure is formed by elastic force of a packing;
Fig. 9 is a cross-sectional view of a state of extracting air forcefully by installing a pump in a lid of vacuum container;
Fig. 10 is a cross-sectional view of a state that a vacuum indicating part of a check valve according to the invention sinks completely downwardly; and
Fig. 11 is a cross-sectional view showing an example that a vacuum indicating part installed on a top surface of valve body sinks downwardly.

### [Best Mode of Embodiments of Invention]

Below, preferable embodiments of the invention are described in detail referring to the attached figures.

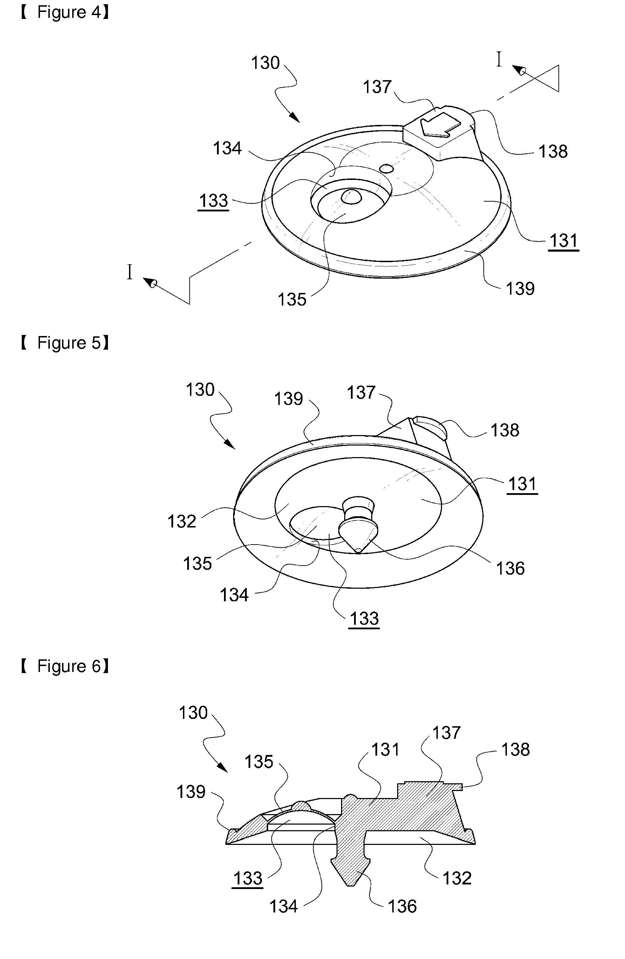

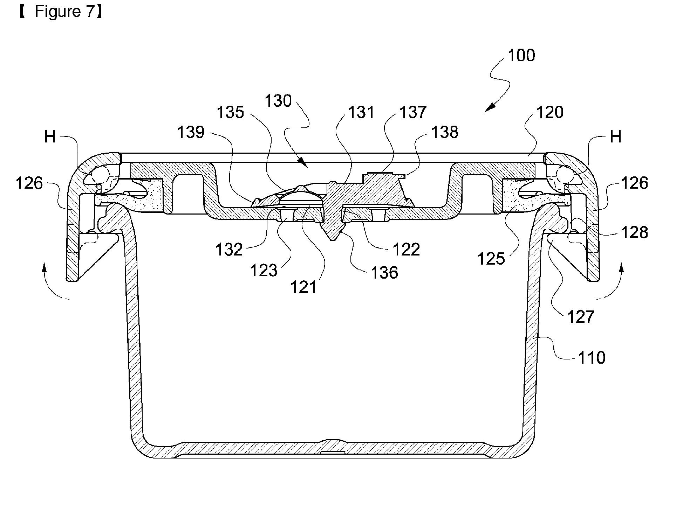

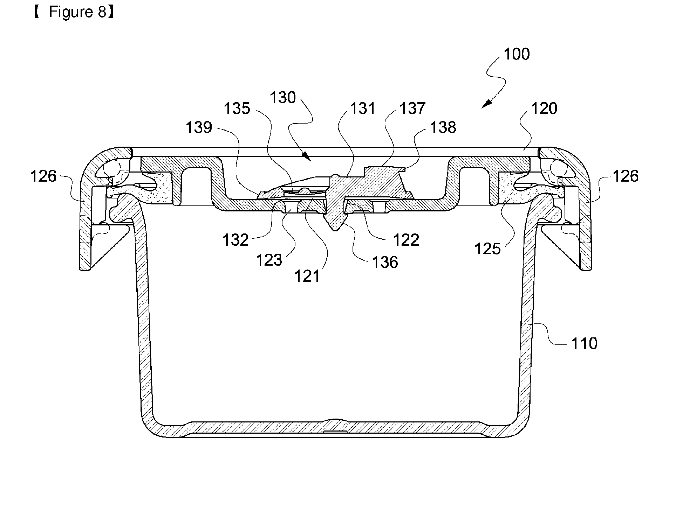

Fig. 4 is a perspective view showing a check valve according to the invention, Fig. 5 is a perspective bottom view of the check valve of Fig. 4, Fig. 6 is a cross-sectional view along I-I in Fig. 4, Fig. 7 is a cross-sectional view of a vacuum container in a state that the check valve according to the invention is installed in the lid, and Fig. 8 is a cross-sectional view of a state that a weak negative pressure is formed by elastic force of a packing.

As shown in Fig. 7, the vacuum container 100 includes a container main body 110 and a lid 120 for sealing an opening of the container main body 110. In a central portion of the lid 120 is formed a valve installing part 121 formed with downwardly concave groove, in a central portion of the valve installing part 121 is formed a valve coupling part 122 of a through-hole shape, and besides the valve coupling part 122 is formed a through-hole 123. In certain cases the through-hole 123 may be formed together with the valve coupling part 122 to which a fixing part 136 is coupled. On a bottom surface of such a lid 120 is installed a packing 125 contacting with a top edge of the container main body 110 for sealing inside of the container main body 110.

And, on both right and left sides of the lid 120 are installed shoulder-lockers 126 rotatably with a hinge part H as a center. In the shoulder-locker 126 are formed a first catching protrusion 127 protruding inwards in a closed state and caught at a bump protruding outward of the container main body 110 and a second catching protrusion 128 caught at the lid 120 itself with an interval forward and backward. The first catching protrusion 127 is for preventing the lid 120 from disengaging even in a state shown in Fig. 7 that vacuum in the vacuum container 100 is resolved, and the second catching protrusion 128 is for maintaining a state that, even when the lid 120 goes down and the catching of the first catching protrusion 127 is released, the shoulder-locker 126 is not shaken but maintains the state fixed to the lid 120 itself.

If the lid 120 is to be disengaged from the container main body 110, first, by rotating the shoulder-locker 126 outwardly as shown by an arrow in Fig. 7, the first catching protrusion 127 must be released from the state of being caught at the container main body 110. Then, if resolving vacuum in the vacuum container 100 completely by lifting the protruding bump 138 of the handle 137 upwardly, the lid 120 can be detached from the container main body 110 easily.

As shown in Figs. 4 to 7, since the check valve 130 according to the invention is coupled to the lid 120 of the vacuum container 100 formed with the valve coupling part 122, and can be used to control air flow through the through-hole 123.

The check valve 130 according to the invention includes a valve body part 131. The valve body part 131 is made of elastic material such as silicon rubber. On a bottom surface of the valve body part 131 is formed a concave part 132 for providing an empty space higher than the edge.

In the valve body part 131 is formed a through-hole 133 extending up and down, and along the inner wall surface 134 of the through-hole 133 is formed a vacuum indicating part 135 while being connected integrally, blocking the through-hole 133. The portion to which the vacuum indicating part 135 is connected is disposed away downwardly from the top end of the through-hole 133. This is one of the features of the invention, which are differentiated from check valve of prior arts. By this, the vacuum indicating part 135 in the check valve 130 according to the invention maintains a state of being connected to a lower side than the top side surface of the valve body part 131.

To maintain the state that the vacuum indicating part 135 is connected to a lower side than the top side surface of the valve body part 131 is for making the sealing force more excellent than the conventional check valves by decreasing lifting of edge of the valve body part 131 by pulling in of a top end of the valve body part 131 even though the vacuum indicating part 135 sinks downwardly by negative pressure generated below the check valve 130.

In such a case, the farther away downwardly from the top end of the through-hole 133 the region which the vacuum indicating part 135 is coupled to is, the better, but if it is away too much, a space for the vacuum indicating part 135 to sink in may be not enough, and then the vacuum-indicating function of the vacuum indicating part 135 may be deteriorated.

That is, in the invention, the vacuum indicating part 135 may be connected integrally along a lower end of the inner wall surface 134 of the through-hole 133, but it is preferable to be connected to the valve body part 131 integrally along the inner wall surface 134 of the through-hole 133 at a position away upwardly also from the lower end of the through-hole 133.

The vacuum indicating part 135 in the above sinks toward the lid 120 if negative pressure is formed in the space between the lid 120 and the valve body part 131, so as to indicate that negative pressure is generated in the vacuum container 100, which has a thickness thinner than that of the valve body part 131 and is formed convexly upwardly. The thickness of the part forming the vacuum indicating part 135 may depend on the size of the vacuum indicating part 135, and about 0.2 ∼ 0.3 mm is appropriate for a vacuum container storing regular food.

The vacuum indicating part 135 can indicate vacuum level by sinking downwardly according to the magnitude of negative pressure generated in the vacuum container 100 within a certain range.

When closing the lid 120, as the packing 125 is pressed upwardly, the internal space enclosed by the container main body 110 and the lid 120 is reduced so as to extract the internal air, and if in this state the external force applied on the lid 120 is removed, since the lid 120 is lifted up by elastic force of the packing 125, negative pressure of low level is generated in the vacuum container 100. In such a case, since the negative pressure is generated by the elastic force of the packing 125 only, in the container main body 110 is formed a weak vacuum as shown in Fig. 8.

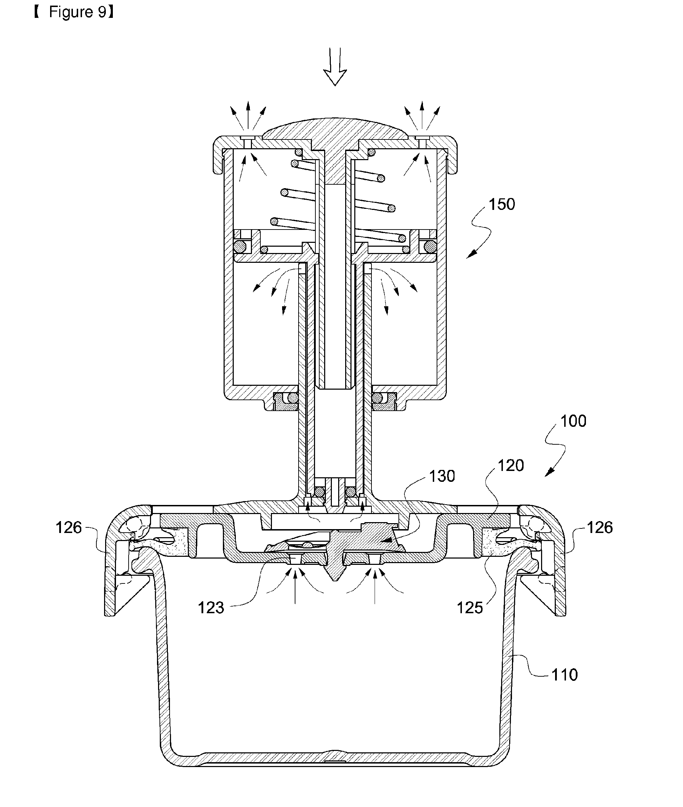

In a case for increasing the vacuum level in the container main body 110, as shown in Fig. 9, a pump is installed on the lid 120 and the air in the container main body 110 is extracted forcefully through the check valve 130.

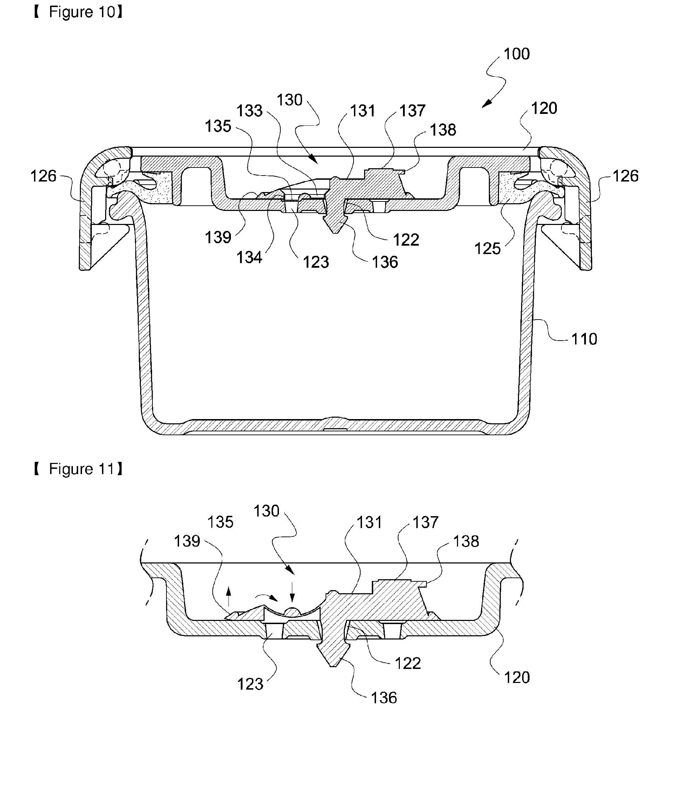

The vacuum indicating part 135 of the check valve 130 according to the invention is preferably configured that the length of the cross-sectional surface of the vacuum indicating part 135 is long enough, so that it is press-attached completely to the surface of the lid 120 facing the vacuum indicating part 135 and the inner wall surface 134 of the through-hole 133 below the vacuum indicating part 135 when it sinks downwardly by heightening the negative pressure formed in the container main body 110 using the pump as in the above, which is going to be explained in detail below referring to Figs. 9 and 10.

On a bottom central portion of the valve body part 131 is formed a fixing part 136 protruding downwardly. The fixing part 136 is coupled to the valve coupling part 122 having a through-hole shape formed in the lid 120 so as to fix the valve body part 131 to the top surface of the lid 120, its lower end has a shape of cone so as to be easily coupled to the valve coupling part 122 and not to be disengaged after engaging, and it uses a catching bump installed on the conic shape. The edge of the valve body part 131 of the check valve 130 installed in the lid 120 through the fixing part 136 maintains a state pressing on the top surface of the lid 120. In other words, in a state that the check valve 130 is installed in the lid 120 through the fixing part 136, the edge of the valve body part 131 is pressed by the surface of the lid 120. By this, some initial sealing effect can be maintained. In the state of Fig. 7, if heightening the installation height of catching bump of the fixing part 136 caught at a bottom surface of the lid 120 relatively, the edge of the valve body part 131 is press-attached strongly to the surface of the lid 120, and if lowering relatively, the strength that the edge of the valve body part 131 is press-attached to the edge of the valve body part 131 is reduced.

In a state that the edge of the valve body part 131 is press-attached to the surface of the lid 120 weakly, even though the lid 120 is pressed strongly by hand, relatively weak and long air-venting sound (referred as "air-venting sound" below) is generated as the air escapes from the inside of the container main body 110 to the outside.

However, in a state that the edge of the valve body part 131 is press-attached to the surface of the lid 120 strongly, if pressing the lid 120 strongly by hand, a strong and short sound (referred as "air-venting effect sound" below) is generated as the air escapes from the inside of the container main body 110 to the outside. In such a case, the user can know for sure that the air escaped from the inside of the container main body 110 to the outside. If louder air-venting effect sound is desired, it helps to enlarge the size of the edge protrusion 139.

On a top surface of the valve body part 131 is installed the handle 137. The handle 137 is installed so as to protrude upwardly from an edge of one side of the valve body part 131, and is for enabling the user to hold with hand and lift the edge of the one side of the valve body part 131, so as to resolve the vacuum state easily. The handle 137 in this embodiment has a shape of rectangular cylinder. This is for the user to lift up the edge of the one side of the valve body part 131 easily with hand.

Also, the outer side surface of the handle 137 is formed so as to tilt inwards as going upwardly from the edge of the valve body part 131. This enables that the vacuum is resolved by lifting the handle 137 a little, and further to provide a space large enough for receiving a finger of the user by making the space at the side surface larger.

The check valve 130 according to the invention includes an edge protrusion 139 protruding upwardly and forming a ring shape which is formed continuously along a top surface of the edge of the valve body part 131. The edge protrusion 139 is for maintaining the vacuum state much longer, by making the edge of the valve body part 131 thicker in a ring shape so that the ring shape is not deformed when the vacuum level in the vacuum container 100 is low and also high. In a case that there is no edge protrusion 139, it is not easy to obtain symmetry according to the variation of the vacuum level in directions of front-and-rear and right-and-left in the thin edge of the valve body part 131, which is disadvantageous in maintaining the vacuum level. This is also one of the features of the invention.

Fig. 9 is a cross-sectional view of a state of extracting air forcefully by installing a pump in a lid of vacuum container, Fig. 10 is a cross-sectional view of a state that a vacuum indicating part of a check valve according to the invention sinks completely downwardly, and Fig. 11 is a cross-sectional view showing an example that a vacuum indicating part installed on a top surface of valve body sinks downwardly.

In a state of Fig. 7 or Fig. 8, in a case of extracting or discharging air in the vacuum container 100 using the pump 150 to outside, by installing the pump 150 in the lid 120 as shown in Fig. 9, the air in the vacuum container 100 is discharged, so that a strong vacuum is generated in the container main body 110 as in Fig. 10. In a state of installing the pump 150 on the lid 120, if pressing the top end of the pump 150 downwardly as shown in Fig. 9, the edge of the check valve 130 is lifted up a little and the internal air is discharged to outside of the lid 120 through the through-hole 123, and the air between the pump 150 and the lid 120 is discharged to outside of the pump 150 along the path denoted with arrow. If negative pressure higher that a specific level is formed by repeating this process, as shown in Fig. 10, the vacuum indicating part 135 sinks downwardly completely and press-attached to the inner wall surface 134 of the through-hole 133 beneath the vacuum indicating part 135 and the surface of the lid 120. Also, as the negative pressure formed in the vacuum container 100 increases, the lid 120 descends more and more so that the first catching protrusion 127 is positioned much further from the bump of the container main body 110, and the contacting area of the valve body part 131 that is press-attached to the surface of the lid 120 increases more and more, increasing the sealing force of the check valve 130. This can be seen by comparing Figs. 7 to 10.

In a state of Fig. 10, even though larger negative pressure is formed in the vacuum container 100, the vacuum indicating part 135 does not receive stronger force pulling downwardly. For this, the length of cross-sectional surface of the vacuum indicating part 135 as shown as a cross-section in Fig. 7 must be not less than the surface length of a surface beneath the vacuum indicating part 135 facing a cross-sectional surface of the vacuum indicating part 135. Here, the surface length is the sum of the length of a surface of the lid 120 facing the cross-sectional surface of the vacuum indicating part 135, the length from the one end of the cross-sectional surface of the vacuum indicating part 135 to the surface of the lid 120 beneath the one end, and the length from the other end of the cross-sectional surface of the vacuum indicating part 135 to the surface of the lid 120 beneath the other end.

For example, as shown in Fig. 11, in a state that the vacuum indicating part 135 is installed by being connected integrally to the top surface of the valve body part 131, if the vacuum indicating part 135 sinks downwardly by the internal negative pressure, since the vacuum indicating part 135 pulls the top end of the valve body part 131 downwardly, the edge of the valve body part 131 outside the vacuum indicating part 135 is lifted with a relatively large force upwardly, so that the sealing force is deteriorated.

In a state that the vacuum indicating part 135 is installed by being connected integrally to the top surface of the valve body part 131, in order to make the length of the cross-sectional surface of the vacuum indicating part 135 large so that the vacuum indicating part 135 is press-attached to the lower side surface, the curvature of the vacuum indicating part 135 must be reduced and it must protrude more upwardly, but in such a case, since the vacuum indicating part 135 gets hard to sink, the vacuum indicating part 135 cannot perform its function in a state of a low negative pressure.

That is, as shown in Figs. 4 to 8, the vacuum indicating part 135 according to the invention is preferably installed by being connected integrally to the inner wall surface 134 of the through-hole 133 beneath the top surface of the valve body part 131, and further preferably the length of the cross-sectional surface of the vacuum indicating part 135 is not less than a surface length connecting the surface beneath it.

If the vacuum state needs to be resolved, by lifting the protruding bump 138 of the handle 137 upwardly air is introduced into the vacuum container 100, resolving the vacuum state.

### [Industrial Applications]

The present invention may be applied in manufacturing vacuum container for storing contents to be stored in vacuum state such as food.

## Claims

1. A check valve for engaging a lid having through-hole and valve coupling part and controlling air flow through the through-hole, the check valve comprising:
a valve body part which is made of an elastic material, is provided with a concave part for providing on the bottom surface thereof an empty space higher than the edge thereof, and has a through-hole vertically formed therein;
a vacuum indicating part which is connected integrally to the valve body part along the inner wall surface of the through-hole at a position spaced downwardly from the top of the through-hole, is formed to be thinner than the thickness of the valve body part and protrude upwardly, and sinks toward a lid when negative pressure is generated in the space between the lid and the valve body part; and
a fixing part which is coupled to a valve coupling part so as to fix the valve body part to the valve coupling part.

2. The check valve of Claim 1, wherein the vacuum indicating part is connected integrally to the valve body part along the inner wall surface of the through-hole at a position spaced upwardly from the bottom of the through-hole.

3. The check valve of Claim 1, wherein a length of a cross-sectional surface of the vacuum indicating part is not less than a surface length of a bottom of the vacuum indicating part facing the cross-sectional surface of the vacuum indicating part, and wherein the surface length is a sum of a surface length of the lid facing the cross-sectional surface of the vacuum indicating part, a length from an end of the cross-sectional surface of the vacuum indicating part to a surface of the lid below the end, and a length from the other end of the cross-sectional surface of the vacuum indicating part to the surface of the lid below the other end.

4. The check valve of Claim 1, wherein an edge protrusion is provided, which is formed continuously along an edge top surface of the valve body part so as to have a ring shape and protrudes upwardly.

5. The check valve of Claim 1, wherein a handle is installed, which is provided protruding upwardly at an edge of the valve body part and configured for being grabbed by a hand of user and lifted by an edge of the valve body part so as to relieve vacuum state.

6. The check valve of Claim 5, wherein the handle has a shape of rectangular cylinder, a protruding bump protruding outwardly on a top end of the handle, and an outer side surface of the handle is formed so as to be sloped inwardly as going upwardly from an edge of the valve body part.

7. The check valve of any one of Claims 1 through 6, wherein in a state of being installed in the lid through the fixing part the edge of the valve body part is pressed upwardly by a surface of the lid.

8. A vacuum container lid for opening or closing an opening of the container main body provided in an internal space for storing contents, the vacuum container lid comprising:
a lid body having a packing provided on a bottom surface so as to seal the opening of the container main body and formed with a through-hole and a valve coupling part; and
a check valve coupled to the valve coupling part and for controlling air flow through the through-hole,
wherein the check valve comprises:
a valve body part which is made of an elastic material, is provided with a concave part for providing on the bottom surface thereof an empty space higher than the edge thereof, and has a through-hole vertically formed therein;
a vacuum indicating part which is connected integrally to the valve body part along the inner wall surface of the through-hole at a position spaced downwardly from the top of the through-hole, is formed to be thinner than the thickness of the valve body part and protrude upwardly, and sinks toward a lid when negative pressure is generated in the space between the lid and the valve body part; and
a fixing part which is coupled to a valve coupling part so as to fix the valve body part to the valve coupling part,
wherein the check valve is according to any one of Claims 1 through 6.

9. The vacuum container lid of Claim 8, wherein in the check valve, in a state of being installed in the lid through the fixing part, the edge of the valve body part is pressed upwardly by a surface of the lid even though negative pressure is not formed in the container main body.

10. The vacuum container lid of Claim 8, wherein in the check valve, the edge of the valve body part is pressed upon the top surface of the lid by a catching bump formed a bottom side part of the fixing part and caught at a bottom surface of the lid through the valve coupling part.

11. The vacuum container lid of Claim 9, wherein the edge of the valve body part is pressed upon the top surface of the lid, so that when pressing the lid installed in the container main body the air in the internal space of the container main body escapes to outside and generates an air-venting effect sound.
